# EUROPÄISCHE PATENTSCHRIFT

(11) **EP 2 041 502 B1**
(45) Veröffentlichungstag und Bekanntmachung des Hinweises auf die Patenterteilung: **14.10.2009**
(21) Anmeldenummer: 07765159.4
(22) Anmeldetag: 11.07.2007
(51) Int. Cl.: F25D 3/06

(54) **TRANSPORTBEHÄLTER ZUR KÜHLHALTUNG VON GEFRORENEM GUT**
TRANSPORT CONTAINER FOR MAINTAINING THE TEMPERATURE OF FROZEN GOODS
RÉCIPIENT DE TRANSPORT PERMETTANT LA CONSERVATION AU FROID DE PRODUITS CONGELÉS

(30) Priorität: 13.07.2006 DE 102006032435
(43) Veröffentlichungstag der Anmeldung: 01.04.2009
(73) Patentinhaber: Sixt, Bernhard, 85667 Oberpframmern (DE)
(72) Erfinder: Sixt, Bernhard, 85667 Oberpframmern (DE)
(74) Vertreter: Sandmann, Joachim
(86) Internationale Anmeldenummer: PCT/EP2007/006138
(87) Internationale Veröffentlichungsnummer: WO 2008/006558

(56) Entgegenhaltungen:
- WO-A-20/05066559
- DE-U1-202006 004 344
- US-A- 5 355 684

## Beschreibung

Die Erfindung bezieht sich auf einen Transportbehälter zur Kühlhaltung von gefrorenem Gut, insbesondere von gefrorenen biologischen Gewebeproben oder Zellkulturen.

Bei der klinischen Diagnose und im klinischen Forschungsbereich besteht oft die Notwendigkeit, Gewebeproben in einem externen Speziallabor schnell analysieren zu lassen, um Ergebnisse für eine Therapie-Entscheidung zu erhalten. Die zur Anwendung kommenden Analysemethoden (z.B. RNA-Analysen, Proteinmarker) entwickeln sich rapide weiter. Es hat sich gezeigt, dass durch Tieffrieren einer Probe am wenigsten der in ihr enthaltenen Information zerstört wird. Da in der Forschung nahezu täglich neue Marker gefunden werden, ist das Konservieren der Information wichtig und macht es Sinn, an der Probe nicht nur die heute möglichen Untersuchungen durchzuführen sondern die Proben möglichst dauerhaft durch Tieffrieren zu konservieren. Sollte Monate oder gar Jahre nach der Probenentnahme der Patient ein Problem bekommen, z.B. einen Rückfall erleiden und eine Therapie benötigen, könnte eine erneute Untersuchung der originären Probe mit möglicherweise zum Zeitpunkt der Probenentnahme noch unbekannten Analysemethoden hilfreich sein und z.B. eine Erfolg versprechende gezielte teure, moderne Therapie an Stelle einer ungezielten Standard-Therapie indizieren sowie finanziell gegenüber Kostenträgern rechtfertigen.

Es ist daher wichtig, einen Transportbehälter für das Versenden von gefrorenen Einzelproben zu haben, der bei möglichst kleiner und leichter Bauweise zuverlässig eine transportbedingte Unterbrechung der geschlossenen Gefrierkette vermeidet, bestehenden Vorschriften genügt und den Versandaufwand niedrig hält. Der Aufwand und die Kosten des Versandes können zwar bis zu einem gewissen Grad durch Sammeln von Proben und gemeinsamem Versand herabgesetzt werden, wobei ein Sammelzeitraum von maximal fünf Tagen in Betracht kommt, jedoch führt das zu administrativem und logistischem Aufwand, wobei eine Zwischenlagerung der Proben bei Tiefsttemperaturen nötig wird. Nur die wenigsten Krankenhäuser besitzen eine dazu benötigte Tiefkühltruhe, die auf beispielsweise -70°C kühlt.

Aus WO 2005/066 559 A2 ist bereits ein Transportbehälter zur Kühlhaltung von gefrorenen biologischen Gewebeproben und Zellkulturen bekannt. Er besteht aus einem Isolierbehälter, der durch ein isolierendes Deckelteil zugänglich ist und eine Superisolierung mit einer Wärmeleitzahl λ ≤ 0,002 W/m K aufweist. Im Isolierbehälter ist ein Kühlbehälter mit einer Kältemittelkammer vorgesehen, die eine Probenkammer für das gefrorene Gut unter Freilassung einer verschlußteilseitigen Zugangsöffnung umschließt, dauerhaft hermetisch verschlossen ist und ein Kältemittel enthält, das durch Phasenumwandlung fest/flüssig Kälte abgibt. Das Kältemittel erfährt die Phasenumwandlung im Temperaturbereich von -15° bis -100°C, insbesondere -30° bis -85°C, und weist eine Schmelzwärme von mindestens 50 J/ml auf.

Bei diesem bekannten Transportbehälter ist der Kühlbehälter mit der Kältemittelkammer und der Probenkammer aus dem Isolierbehälter entnehmbar. Die Probenkammer erstreckt sich nahezu bis zum oberen Ende des Kühlbehälters. Die metallische Innenwand des Isolierbehälters geht mit metallischem Kontakt in die Außenwand über.

Diese bekannte Ausbildung ermöglicht durch die Verwendung eines Kältemittels mit hoher Schmelzwärme sowie durch die Superisolierung mit niedriger Wärmeleitzahl bereits eine mehrtägige Kühlhaltung von gefrorenen Proben, die vorbeschriebenen hohen Anforderungen lassen sich jedoch nicht immer zuverlässig erfüllen, weil Wärmebrücken vorhanden sind, die wegen des schädlichen Eindringens von Wärme zu einer vorzeitigen Erschöpfung des Kältemittels und damit zu einem Verlust von Informationen der Probe führen können. Außerdem hat sich auch die Handhabung des bekannten Transportbehälters als noch nicht optimal erwiesen.

Des Weiterem ist ein Transportbehälter entsprechend dem Oberbegriff des Anspruchs 1 aus DE 20 2006 004344 bekannt.

Dementsprechend liegt der Erfindung die Aufgabe zugrunde, einen hinsichtlich seiner Funktion und Handhabung verbesserten Transportbehälter zu schaffen, der eine sichere Tiefkühlhaltung während Lagerung und Transport gewährleistet.

Diese Aufgabe wird ausgehend vom vorstehend bekannten Transportbehälter DE 20 2006 004344 erfindungsgemäß dadurch gelöst, dass eine Evakuiereinrichtung zum Evakuieren des Deckelinnenraums einschließlich des den Isolierschaft umgebenden Halsöffnungsspalts vorgesehen ist.

Mit dieser Maßnahme wird einem Wärmeeintrag durch Konvektion der Luft im Deckelinnenraum und innerhalb der anschließenden Halsöffnung dadurch entgegen gewirkt, dass infolge des Stopfens mit dem Isolierschaft nur ein enger Halsöffnungsspalt verbleibt und zudem die eingeschlossene Luftmenge evakuiert werden kann.

Würde man zur Vermeidung der Wärmebrücke zwischen Innenwand und Außenwand des Isolierbehälters den ganzen Isolierbehälter aus schlecht Wärme leitendem Kunststoff machen, so hat das den Nachteil, dass dieser nicht nur gegen das (organische) Kältemittel resistent sein muß sondern zusätzlich sowohl tiefsttemperaturstabil als auch hochvakuumdicht sein muss. Das heißt auch, dass keine organische Ausgasung vom Kunststoff selbst und keine Diffusion des Kältemittels erlaubt sind. Das Dilemma lässt sich auch nicht dadurch lösen, dass man einen separaten Kältemittelbehälter aus Metall in den Kunststoffbehälter einbaut, weil dann ein Spalt zwischen Probenkammer und Hals entsteht, der im täglichen Gebrauch nicht mehr zugänglich ist. Wegen bestehender Transportvorschriften für biologische Proben und Gewebeproben sowie aus hygienischen Gründen muss aber der Probenraum abgeschlossen und bei Wiederverwendung des Transportbehälters leicht zu reinigen sein. Daher ist es sinnvoll, den Kühlbehälter fest in den Isolierbehälter zu integrieren und die Wand der Probenkammer und die Halsöffnung zusammen mit der Innenwand des Kühlbehälters in einem Stück z.B. aus Edelstahl zu fertigen und so eine nahtlose Probenkammer zu erhalten. Dabei hat die metallische Innenwand zusätzlich den Vorteil eines verbesserten Wärmeübergangs während des Kältebeladens vor dem Einsatz des Behälters, also während der Umwandlung des flüssigen Kältemittels in die feste Phase.

Der erfindungsgemäße Transportbehälter erlaubt nach der Kältebeladung unter vollständigem Übergang des Kältemittels in den festen Zustand eine circa 14-tägige Kühldauer und macht somit eine Kältebeladung beim Lieferanten sowie ein "ready to use" System möglich, bei dem der Kunde, z.B. ein Krankenhaus, mit gebrauchsfertigen Transportbehältern versorgt wird, die mit der erforderlichen Sicherheit vom Lieferanten zum Kunden geschickt, von diesem bis zu einer Woche zwischengelagert und dann vom Kunden an ein Zentrallabor gesendet werden können.

Zweckmäßige Ausgestaltungen und Weiterbildungen der Erfindung ergeben sich aus den Unteransprüchen. Diese betreffen auch zweckmäßige Maßnahmen im Zusammenhang mit der Kältebeladung und werden in der nachfolgenden Figurenbeschreibung noch angesprochen.

Der erfindungsgemäße Transportbehälter und seine Herstellung sowie dem Transportbehälter zugeordnete Kälteübertragungsvorrichtungen für die Kältebeladung werden nachfolgend beispielhaft anhand von schematischen Zeichnungen näher erläutert. Es zeigen:
- Figur 1: einen Transportbehälter mit drei Proben in einem Schnitt durch die Behälterachse;
- Figur 2: den Transportbehälter gemäß Figur 1 mit einem als Umverpackung dienenden Außenbehälter in verkleinertem Maßstab und ebenfalls in Schnittdarstellung;
- Figur 3: den Außenbehälter gemäß Figur 2 im weiter verkleinerten Querschnitt;
- Fig. 4 bis 7: in Vertikalschnitten Herstellungschritte beim Zusammenbau des Kühlbehälters und seiner Verbindung mit der Innenwand des Isolierbehälters;
- Figur 8: im Vertikalschnitt das Befüllen des Kühlbehälters mit dem Kältemittel durch einen Einfüllöffnung;

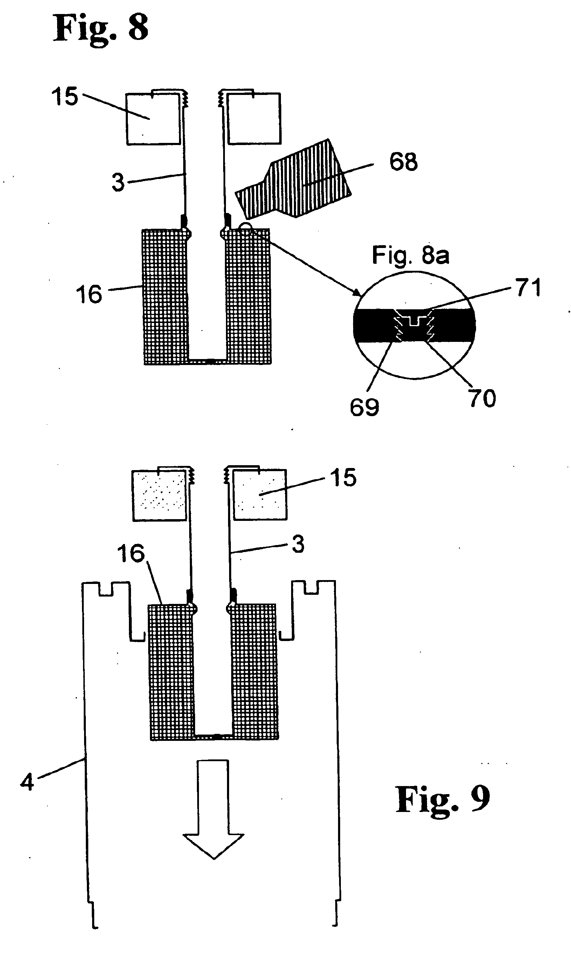

- Figur 8 a: eine Detailvergrößerung aus Figur 8 nach dem hermetischen Verschließen der Einfüllöffnung;
- Fig. 9 bis 12: in Vertikalschnitten den weiteren Zusammenbau des Isolierbehälters unter Integrierung des Kühlbehälters;

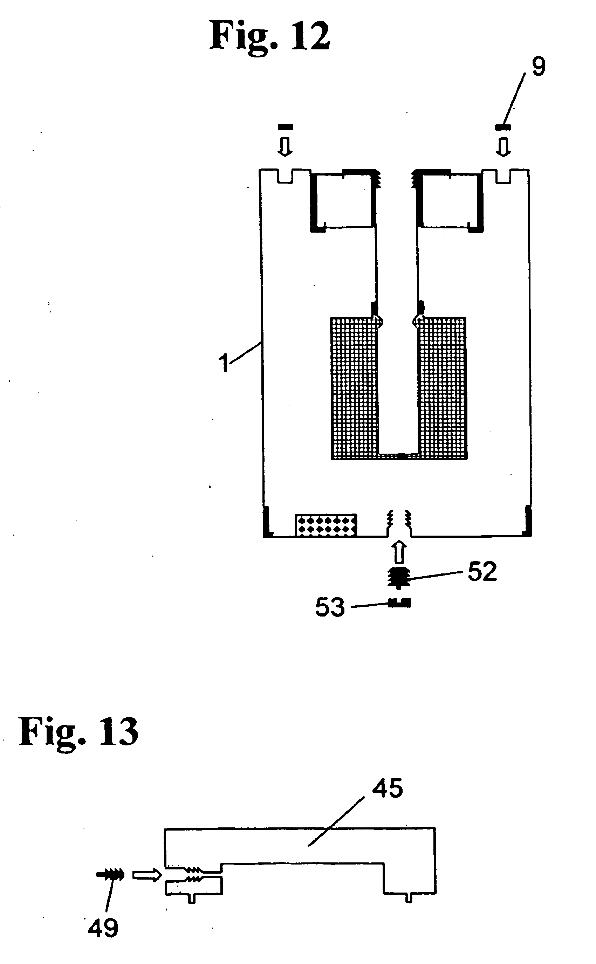

- Figur 13: in einem Vertikalschnitt den Deckelteil des Isolierbehälters mit angedeutetem Einbau eines Evakuierventils;

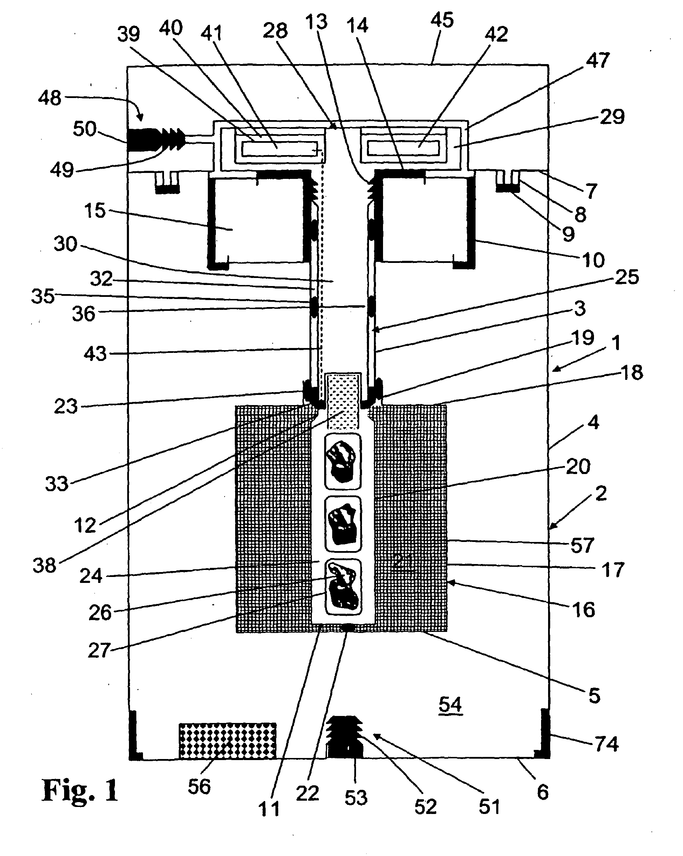

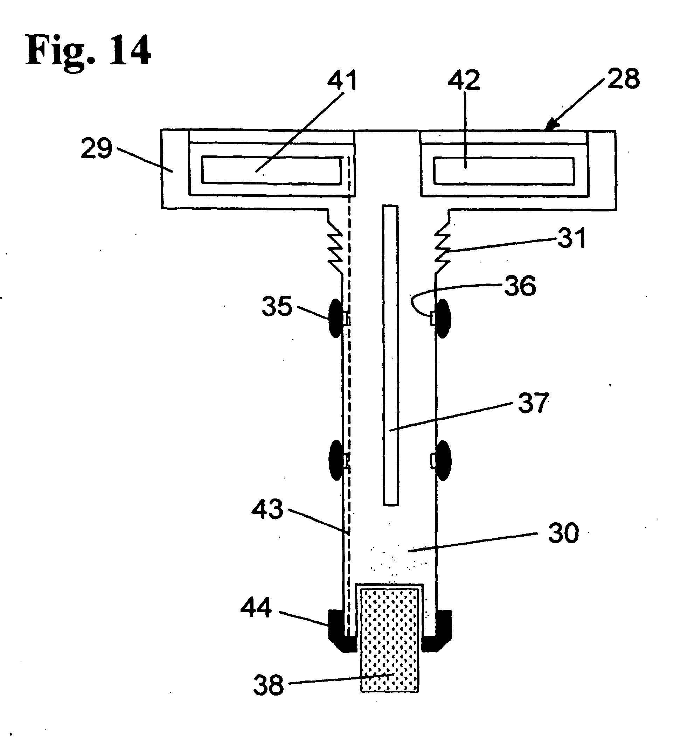

- Figur 14: in vergrößertem Maßstab und teilweise vertikal geschnitten den gemäß Figur 1 vorgesehenen Stopfen, der vor dem Aufsetzen des Deckelteils in die Halsöffnung eingebaut wird;

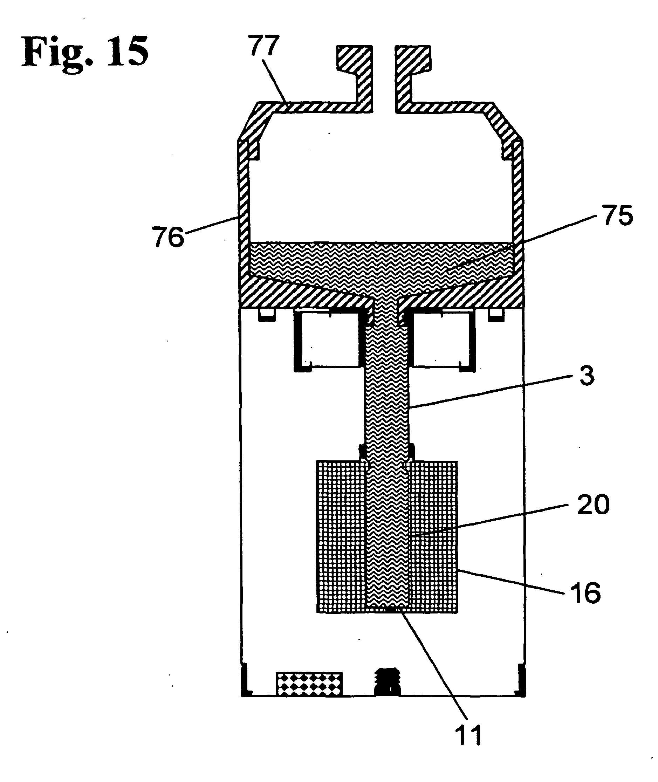

- Figur 15: in einem Vertikalschnitt das direkte Kältebeladen des Transportbehälters mit Flüssig-Stickstoff;

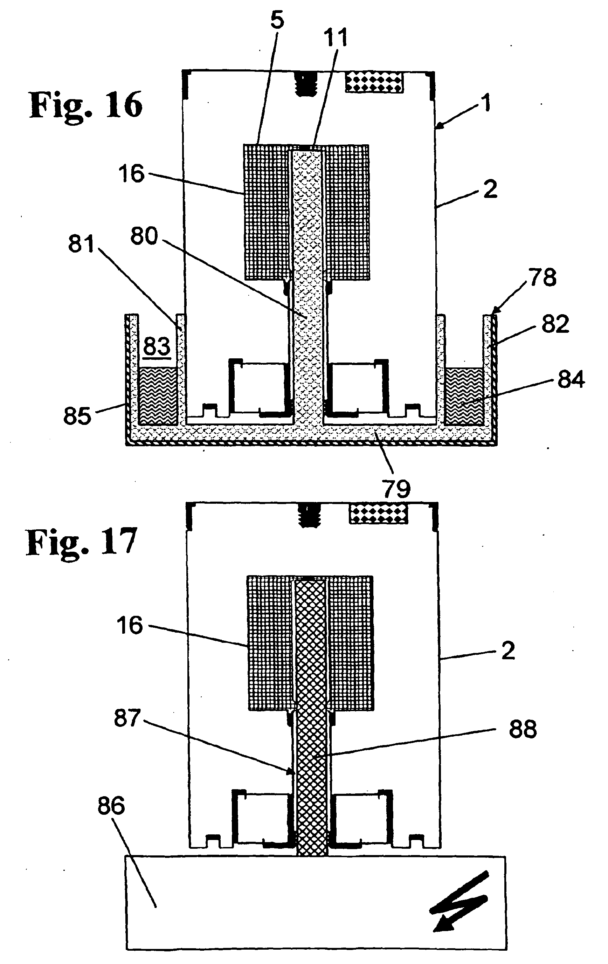

- Figur 16: eine Kältebeladungseinrichtung zur indirekten Kältebeladung des Transportbehälters mit Flüssig-Stickstoff unter Verwendung eines aufragenden Kühlfingers;
- Figur 17: die Kältebeladung mittels eines Kühlfingers bei Nutzung einer anderen Kältequelle;

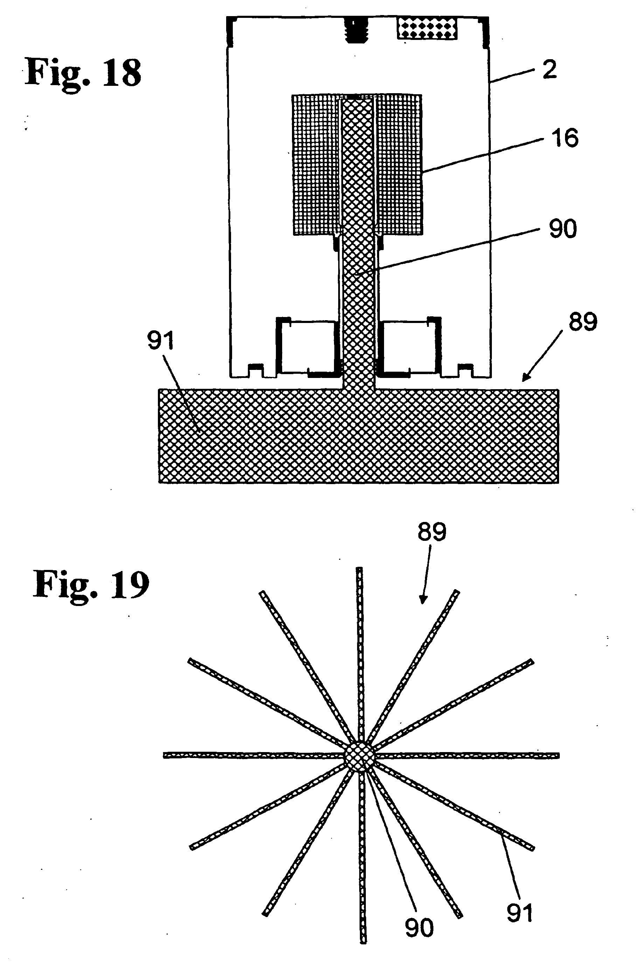

- Figur 18: eine Kälteübertragungsvorrichtung mit aufragendem Kühlfinger zur Anordnung in einem Tiefkühlraum;
- Figur 19: eine Draufsicht auf die Kälteübertragungsvorrichtung gemäß Figur 19 aus Lamellen und aufragendem Kühlfinger;

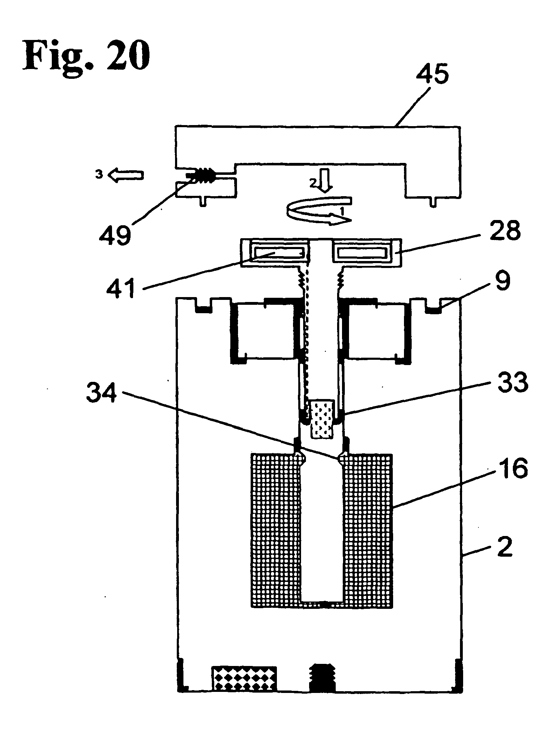

- Figur 20: in einem Vertikalschnitt den versandfertigen Zusammenbau des Transportbehälters nach erfolgter Kältebeladung; und

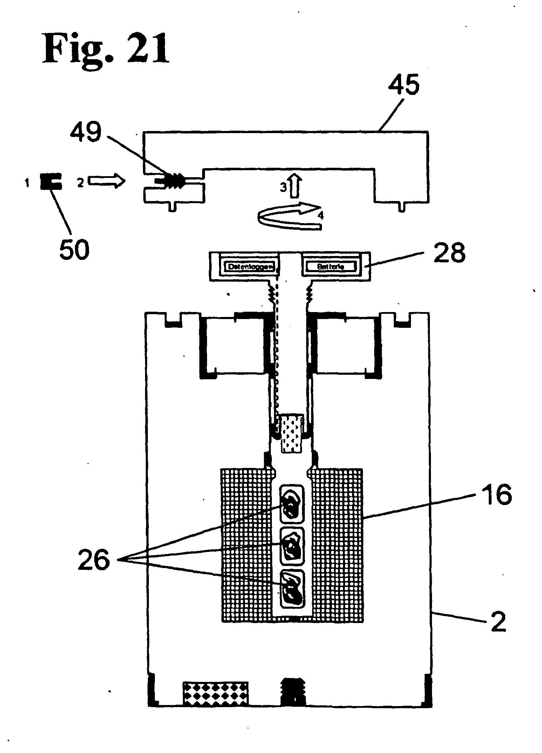

- Figur 21: das Öffnen, Füllen und Wiederverschließen des Transportbehälters an einem dezentralen Ort, an dem die Proben anfallen.

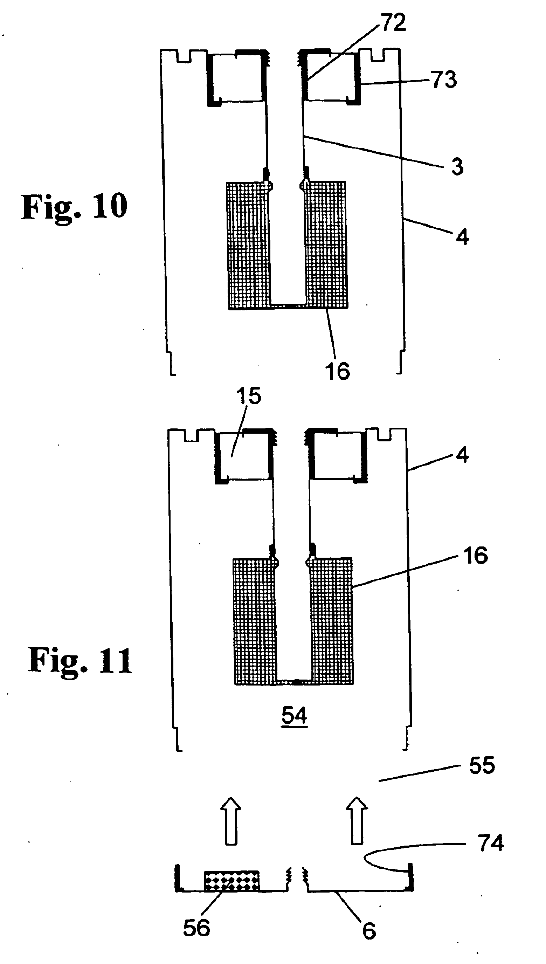

Der in Figur 1 in aufrechter Stellung gezeichnete Transportbehälter 1 weist einen in etwa becherförmigen Isolierbehälter 2 mit einer Innenwand 3 und einer Außenwand 4 sowie einem Innenboden 5 und einem Außenboden 6 auf. Der Außenboden 6 ist wie auch in Figur 11 erläutert auf das leicht eingezogene untere Ende der Außenwand 4 aufgesteckt und mit dieser verklebt oder verschweißt.

Am oberen Ende geht die Außenwand in einen Innenflansch 7 über, der eine Ringnut 8 zur Aufnahme einer Behälterdichtung 9 aufweist und in einen abwärts ragenden umlaufenden Anschlußsteg 10 übergeht.

Die aus dünnwandigem Edelstahl gefertigte Innenwand 3 ist röhrenartig schlank ausgeführt, am unteren Ende mit einem Kammerboden 11 versehen, weist in mittlerer Höhe eine sickenförmige Einschnürung 12 auf, trägt an ihrem oberen Ende ein Innengewinde 13 und geht unmittelbar darüber in einen nach außen vorspringenden Ringflansch 14 über.

Am oberen Ende des Isolierbehälters 2 ist ein Isolierring 15 vorgesehen, mit dem der Ringflansch 14 der Innenwand 3 und der Anschlußsteg 10 der Außenwand 4 im Abstand zueinander fest verklebt sind, wie es auch aus Figuren 10 und 11 zu ersehen ist. Auf diese Weise befindet sich eine Isolierstrecke zwischen den metallischen Wänden 3 und 4 des Isolierbehälters 2. Der eingeklebte Isolierring 15 bewirkt zugleich eine elastische Lagerung der Innenwand 3 gegenüber der Außenwand 4 nach Art eines Silent-Blocks.

In den Isolierbehälter 2 ist ein ringförmiger Kühlbehälter 16 fest integriert, der eine Umfangswand 17 aufweist, die an ihrem oberen Ende in einen Deckelflansch 18 mit aufragendem Innensteg 19 übergeht. Der Kühlbehälter 16 ist derart in den Isolierbehälter integriert, dass seine innere Umfangswand 20 von der unteren Hälfte der Innenwand 3 gebildet ist, während der Innenboden 5 und der Kammerboden 11 den flachen Zentralbereich der Kältemittelkammer 21 bilden. Ein mittiger Schweißpunkt 22 zwischen dem Innenboden 5 und dem Kammerboden 11 verringert eventuelle mechanische Beanspruchungen im oberen Bereich der Innenwand 3. Durch eine Schweißraupe 23 ist der Innensteg 18 des Kühlbehälters 16 fest mit der Innenwand 3 verbunden und dadurch die Kältemittelkammer 21 hermetisch verschlossen.

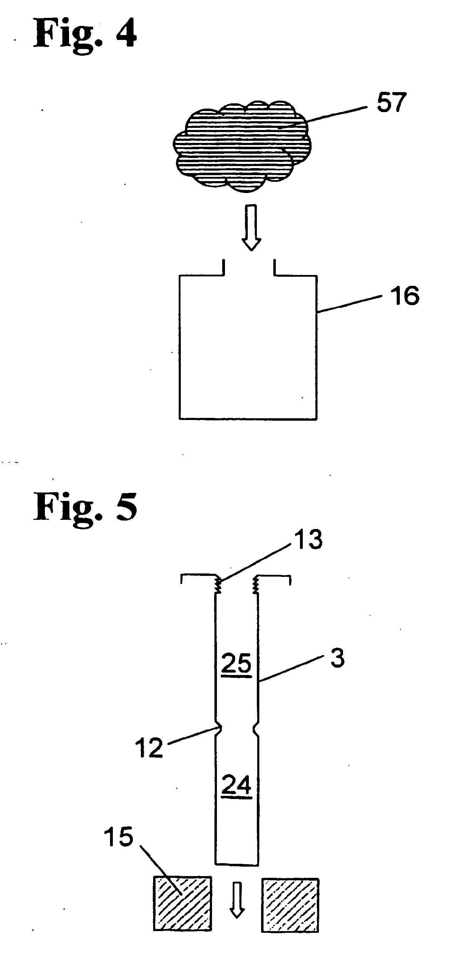

Die Einschnürung 12 der Innenwand 3 unterteilt den Raum innerhalb der Innenwand 3 in eine untere Probenkammer 24 und eine obere Halsöffnung 25 (Figur 5). Wie dargestellt kann die Probenkammer 24 gleichzeitig drei verschiedene Proben 26 in jeweils einem Probenbehälter 27 aufnehmen, bei denen es sich z.B. um Nunk Röhrchen handeln kann.

In die Halsöffnung 25 ist ein Stopfen 28 eingebaut, der in Figur 14 vergrößert dargestellt ist. Der Stopfen 28 ist im Vertikalschnitt T-förmig mit einem oberen verbreiterten Kopf 29 und einem zentral herabragenden Isolierschaft 30 ausgebildet, der an seinem oberen Ende ein Außengewinde 31 aufweist. Damit ist der Stopfen 28 in das Innengewinde 13 der Innenwand 3 eingeschraubt. Dabei entspricht die Länge des Isolierschafts 30 der Höhe der Halsöffnung 25, so dass von dieser nur ein Ringspalt 32 frei bleibt. Der Isolierschaft 30 trägt an seinem unteren Ende eine ringförmige Halsdichtung 33, die beim Einschrauben des Stopfens 28 gegen den von der Einschnürung 12 an der Innenseite der Innenwand 3 gebildeten Ventilsitz 34 (Figur 20) gedrückt wird und dadurch die Probenkammer 24 gegenüber der Halsöffnung 25 bzw. dem Ringspalt 32 abdichtet. Dieser Ringspalt 32 ist durch O-Ringe 35, die in Ringnuten 36 des Isolierschafts 30 eingesetzt sind, in Abschnitte unterteilt. Dadurch wird der Wärmeübertragung durch den Ringspalt 32 infolge Konvektion entgegen gewirkt. Eine Längsnut 37 (Figur 14) im Isolierschaft 30 erstreckt sich über die O-Ringe 35 und das Außengewinde 31 hinaus und sorgt für einen Druckausgleich zwischen den Spaltabschnitten und der Oberseite des Stopfens 28.

An seiner Unterseite trägt der Isolierschaft 30 einen vorspringenden Tampon 38, der dem Aufsaugen evtl. austretender Probenflüssigkeit dient und leicht auswechselbar ist. Der Kopf 29 ist mit Hohlräumen 39 versehen, die von oben zugänglich und durch Hohlraumdeckel 40 abgedeckt sind. Die Hohlräume 39 können beispielsweise einen Datenlogger 41 und eine diesem zugeordnete Batterie 42 aufnehmen. Der Datenlogger 41 ist über eine vakuumdicht eingegossene Signalleitung 43 mit einem Temperatursensor 44 am unteren Ende des Isolierschafts 30 verbunden, so dass die in der Probenkammer 24 herrschende Temperatur fortlaufend aufgezeichnet werden kann. Alternativ kann ein vereinfachter Stopfen ohne Datenlogger, Batterie und Temperatursensor vorgesehen sein.

Der Isolierbehälter 2 ist durch ein wärmeisolierendes Deckelteil 45 abgedeckt, das an seiner Unterseite mit einem Ringsteg 46 versehen ist, der mit der Behälterdichtung 9 abdichtend zusammenwirkt. Das Deckelteil 45 weist an seiner Unterseite eine Ausnehmung auf, die den Deckelinnenraum 47 bildet. Dieser nimmt den Kopf 29 des Stopfens 28 lose auf.

Im Deckelteil 45 ist eine an den Deckelinnenraum 47 angeschlossene Evakuiereinrichtung 48 in Form eines Evakuierventils 49 mit aufgesetzter Schutzkappe 50 vorgesehen.

Eine entsprechende Evakuiereinrichtung 51 mit einem Evakuierventil 52 und einer Schutzkappe 53 ist in den Außenboden 6 des Isolierbehälters 2 eingebaut. Damit kann die im Isolierbehälter 2 gebildete Isolierkammer 54, die vollständig mit einem Vakuumstützmaterial 55 wie beispielsweise pyrogene Kieselsäure gefüllt ist. Dieses bewirkt bei der Evakuierung der Isolierkammer eine Versteifung der Konstruktion. Zum Binden von Restgasen in der Isolierkammer 54 ist im Bodenbereich des Isolierbehälters 2 ein Getter 56 eingebaut.

Auch die Kältemittelkammer 21 ist abgesehen von der Kältemittelfüllung mit einer Metallwollefüllung 57 versehen, wodurch die Wärmeleitung innerhalb der Kältemittelkammer wesentlich verbessert wird, was der Kältebeladung bzw. der Phasenumwandlung flüssig/fest des Kältemittels zugute kommt.

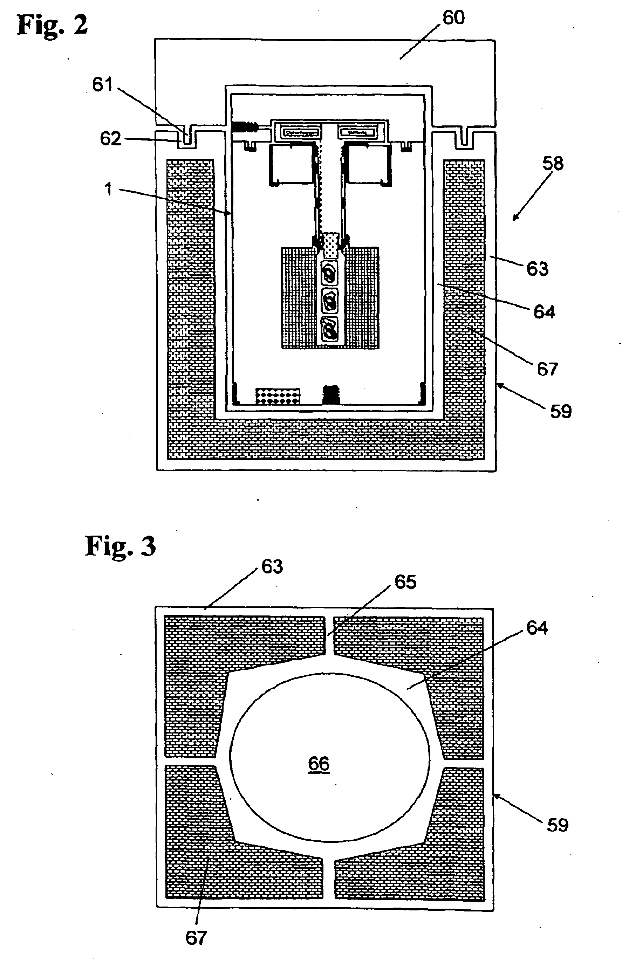

Figuren 2 und 3 zeigen im Vertikalschnitt und im Horizontalschnitt eine wahlweise zum Einsatz kommende Umverpackung 58 für den Transportbehälter 1. Diese Umverpackung 58 besteht aus einem Außenbehälter 59 mit einem Außendeckel 60, der mit einem umlaufenden Dichtungssteg 61 in eine entsprechende Dichtungsnut 62 im oberen Rand des Außenbehälters 59 eingreift. Der Außenbehälter 59 und der Außendeckel 60 sind aus isolierendem Material hergestellt und weisen einen quadratischen Außenquerschnitt sowie einen kreisförmigen Innenquerschnitt auf.

Der Außenbehälter 59 ist als Hohlkörper mit einer Außenwand 63 und einer Innenwand 64 hergestellt, zwischen denen sich Verbindungsstege 65 erstrecken. Die Innenwand 64 umschließt zusammen mit dem Außendeckel 60 eine an den Transportbehälter 1 angepaßte zylindrische Aufnahmekammer 66.

Der zwischen Außenwand 63 und Innenwand 64 gebildete Hohlraum ist ebenfalls mit einem Kältemittel 67 gefüllt, das eine Phasenumwandlung fest/flüssig in einem vergleichsweise höheren Temperaturbereich von 0 bis -15°C erfährt. Dabei kann es sich um Wasser oder auch eine Salzlösung handeln. Die Umverpackung 58 und insbesondere das vor ihrem Einsatz vereise Kältemittel 67 bilden eine Barriere gegen das Eindringen von Wärme zum umschlossenen Transportbehälter 1.

Figuren 4 bis 13 zeigen, aus welchen Einzelteilen der Transportbehälter 1 zusammengesetzt ist und wie der Zusammenbau zweckmäßigerweise durchgeführt wird.

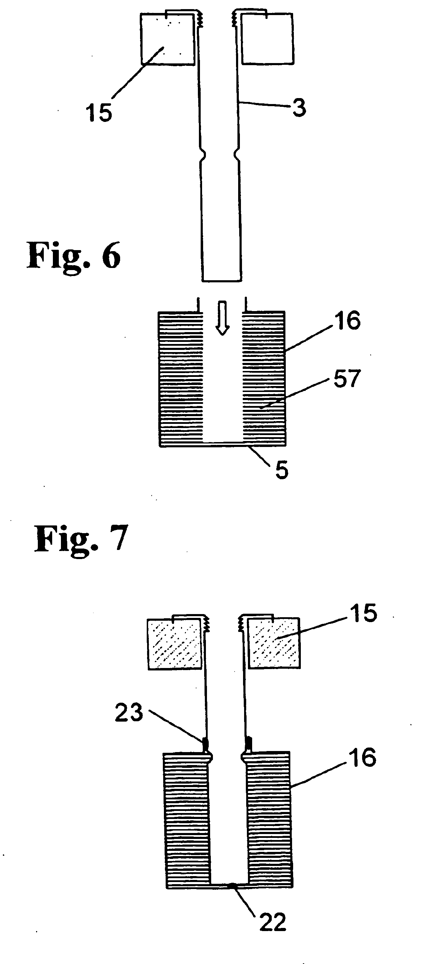

Gemäß Figur 4 wird der Kühlbehälter 16 mit der Metallwollefüllung 57 versehen, bei der es sich zweckmäßigerweise um einen geknäuelten Metallfaden beispielsweise aus Kupfer handeln kann. Diese Metallwollefüllung 57 wird im wesentlichen ringförmig im Kühlbehälter 16 angeordnet, wie es Figur 6 deutlich macht, wobei eine dünne Metallwolleschicht oder wenigstens ein Fadenabschnitt zentral oberhalb des Bodens 5 des Kühlbehälters 16 verbleibt.

Gemäß Figur 5 wird die Innenwand 3 mit dem Innengewinde 13 sowie der Einschnürung 12 in den Isolierring 15 eingeschoben, und zwar bis in die in Figur 6 gezeigte Stellung, worauf die Innenwand 3 wie in Figur 6 gezeigt in den Kühlbehälter 16 eingeführt wird, bis die in Figur 7 gezeigte Stellung erreicht ist. In dieser werden die Böden der Innenwand 3 und des Kühlbehälters 16 durch einen Schweißpunkt 22 aneinander abgestützt und der Kühlbehälter 16 an seinem oberen Ende unter Bildung der Schweißraupe 23 mit der Innenwand 3 fest verbunden.

Der Kühlbehälter 16 weist an seiner Oberseite eine Gewindeöffnung 69 auf, durch die gemäß Figur 8 aus einem Gefäß 68 flüssiges Kältemittel eingefüllt wird, bis der Kühlbehälter 16 im wesentlichen vollständig gefüllt ist. Bei diesem Kältemittel handelt es sich um eine organische Substanz mit einer Phasenumwandlungstemperatur fest/flüssig im Temperaturbereich von -15° bis -100°C und vorzugsweise von -30° bis -85°C sowie mit einer Schmelzwärme von mindestens 50 J/ml. Als derartige Kältemittel kommen beispielsweise Oktan 1-Hexanol, 2-Hexanon, Hexanal, Pyridin, 1,2,4-Trimethylbenzol, 1,3,5-Trimethylbenzol oder Chlorbenzol in Betracht.

Im Anschluß an das Befüllen wird die Gewindeöffnung 69 des Kühlbehälters 16 dadurch dauerhaft hermetisch verschlossen, dass gemäß Figur 8a zunächst eine Madenschraube 70 eingeschraubt, dann die verbleibende Restöffnung zugeschweißt und dann das Schweißmaterial 71 soweit es übersteht bündig abgetragen wird.

Nunmehr wird gemäß Figur 9 die Anordnung aus dem Kühlbehälter 16, der Innenwand 3 und dem Isolierring 15 in die Außenwand 4 eingeführt bis zum Erreichen der Stellung gemäß Figur 10. In dieser Stellung werden die Innenwand 3 und die Außenwand 4 durch Klebemittelschichten 72 und 73 vakuumdicht mit dem Isolierring 15 verbunden, wobei zugleich die elastische Lagerung der Anordnung aus Kühlbehälter 16 und Innenwand 3 gegenüber der Außenwand 4 erzielt wird.

Daraufhin wird gemäß Figur 11 die innerhalb der Außenwand 4 gebildete Isolierkammer 54 des Isolierbehälters 2 mit dem Vakuumstützmaterial 55 gefüllt und der Außenboden 6 mit dem Getter 56 auf das untere Ende der Außenwand 4 aufgeschoben und mittels eines Klebers 74 vakuumdicht mit der Außenwand 4 verbunden, so dass die in Figur 12 gezeigte Anordnung erhalten wird, in die dann am oberen Ende die Behälterdichtung 9 eingelegt und am unteren Ende das Evakuierventil 52 mit der Schutzkappe 53 vakuumdicht eingeschraubt wird, worauf der Isolierbehälter 2 evakuiert wird. Gemäß Figur 13 wird auch in den Deckelteil 45 das Evakuierventil 49 vakuumdicht eingeschraubt.

Schließlich wird der Stopfen 28 gemäß Figur 14 fertig gestellt, indem in ihn der Datenlogger 41, die Batterie 42 und der Temperatursensor 44 eingebaut werden sowie die O-Ringe 35 und der Tampon 38 angebracht werden.

Das Kältebeladen des Transportbehälters 1, also die Phasenumwandlung des Kältemittels im Kühlbehälter 16 von der flüssigen Phase in die feste Phase, kann auf unterschiedliche Weise und mit Hilfe von verschiedenartigen Vorrichtungen durchgeführt werden, die in den Figuren 15 bis 19 erläutert sind.

Figur 15 zeigt das direkte Kältebeladen beispielsweise mit Flüssigstickstoff 75, wozu in das Innengewinde 13 des offenen Transportbehälters 1 (ohne Deckelteil 45 und Stopfen 28) ein Einfülltrichter 76 eingeschraubt ist, das während der Kältebeladung mit einem offenen Deckel 77 versehen ist. Einfülltrichter 76 und Deckel 77 sind aus einem isolierenden Material hergestellt. Bei dieser direkten Kältebeladung ergibt sich der Vorteil, dass die gesamte untere Hälfte der Innenwand 3 mit der inneren Umfangswand 20 und dem Kammerboden 11 vom Flüssigstickstoff 75 kontaktiert ist und damit kälteübertragend wirksam ist, was im Interesse einer kurzen Beladungszeit liegt. Allerdings muss besonders darauf geachtet werden, dass nach Abschluß der Kältebeladung kein (flüssiger) Stickstoff in der Probenkammer 24 und der Halsöffnung 25 verbleibt.

Gemäß Figur 16 ist eine indirekte Kältebeladung mittels Flüssigstickstoff (oder auch Trockeneis bzw. eine Trockeneis-Flüssigkeitsmischung, z.B. Isopropanol) vorgesehen. Dazu dient eine topfförmige Kälteübertragungsvorrichtung 78 mit einer Bodenplatte 79, von der zentral ein langer Kühlfinger 80 sowie eine Innenumfangswand 81 und eine Außenumfangswand 82 aufragen. Zwischen den beiden Umfangswänden 81 und 82 ist eine Ringkammer 83 für den Flüssig-Stickstoff 84 gebildet. Die Kälteübertragungsvorrichtung 78 ist mit einer Außenisolierung 85 versehen, welche die Bodenplatte 79 und die Außenumfangswand 82 umschließt. Die Bodenplatte 79, die Umfangswände 81 und 82 sowie der Kühlfinger 80 sind vorzugsweise einstückig aus einem gut wärmeleitenden Material wie beispielsweise Kupfer hergestellt.

Zur Kältebeladung wird der deckelfreie Transportbehälter 1 in umgekehrter Lage mit der Innenwand 3 auf den Kühlfinger 80 von etwas größerer Länge aufgesteckt, wobei das Behältergewicht einen guten Kontakt der oberen Stirnfläche des Kühlfingers 80 mit dem Kammerboden 11 gewährleistet. Dabei ist der Durchmesser der Innenumfangswand 81 so bemessen, dass sie wie dargestellt das in Beladungsstellung untere Ende des Transportbehälters 1 aufnimmt.

Bei der Beladung gemäß Figur 16 erfolgt der Kältetransport bzw. Wärmetransport durch die Bodenplatte 79 und den Kühlfinger 80 sowie im wesentlichen durch den Kammerboden 11. Dabei wird der Wärmeaustausch mit dem Kältemittel im Kühlbehälter 16 maßgeblich durch die sich auch zwischen dem Kammerboden 11 und dem Innenboden 5 erstreckende Metallwollefüllung bewirkt, die im Hinblick auf die schlechte Wärmeleiteigenschaft von organischen Kältemitteln die Kältebeladungszeit wesentlich abkürzt. Das wird auch dadurch unterstützt, dass der Wärmeübergang durch den Kammerboden 11 am höchsten Punkt des Kältemittels erfolgt, das beim Abkühlen nach unten sinkt und so das Durchfrieren des Kältemittels verbessert.

Gemäß Figur 17 ist in einer der Kältebeladung gemäß Figur 16 entsprechenden Weise eine indirekte Kältebeladung mittels eines aktiven Kühlers 86 als Kältequelle, beispielsweise eines Stirlingkühlers, vorgesehen. Von diesem ragt wiederum ein entsprechend langer metallischer Kühlfinger 87 aus gut wärmeleitendem Material, z.B. Kupfer, auf.

Gemäß Figuren 18 und 19 ist wiederum eine indirekte Kältebeladung jedoch mit passiver Kühlung vorgesehen, die durch Einbringen in einen Tiefkühlraum erfolgt. Dazu ist eine Kälteübertragungsvorrichtung 89 vorgesehen, die wiederum einen aufragenden Kühlfinger 90 aufweist, der an seinem unteren Ende mit sternförmig angeordneten Lamellen 91 verbunden ist, wie es Figur 19 zeigt. Auch hier bestehen der Kühlfinger 90 und die Lamellen 91 aus einem gut wärmeleitenden Metall wie beispielsweise Kupfer.

Figur 20 veranschaulicht den versandfertigen Zusammenbau des Transportbehälters 1, bei dem der Stopfen 28 eingesetzt und gemäß Pfeil 1 eingedreht wird, bis seine Halsdichtung 33 abdichtend an den Ventilsitz 34 angedrückt ist. Gemäß Pfeil 2 wird sodann der Deckelteil 45 aufgesetzt, worauf gemäß Pfeil 3 die Evakuierung des Deckelinnenraums 47 mittels des Evakuierventils 49 erfolgt. Der dadurch bewirkte äußere Überdruck sorgt für ein axiales Andrücken des Deckelteils 45 an den Isolierbehälter 2 unter sicherer Abdichtung mittels der Behälterdichtung 9. Zugleich wird eine Wärmeübertragung durch Konvektion im Ringspalt 32 unterbunden.

Dann ist der Kühlbehälter 16 mit dem vereisten Kältemittel durch die vom evakuierten Isolierbehälter 2 gebildete Superisolierung sowie durch den Stopfen 28 mit seinem Isolierschaft 30 und durch den evakuierten Ringspalt 32 rings um den Isolierschaft 30 vor einem Eindringen von Wärme abgeschirmt, so dass der Vereisungszustand bzw. die Kältebeladung auch bei der Umgebungstemperatur während des Versands an den Einsatzort (Krankenhaus) weitestgehend erhalten bleibt.

Figur 21 veranschaulicht die Handhabung am Einsatzort. Entsprechend den durch Pfeile 1 bis 4 angedeuteten Schritten werden die Schutzkappe 50 abgenommen, der Deckelinnenraum 47 durch Betätigen des Evakuierventils 49 belüftet, der Deckelteil 45 abgehoben und der Stopfen 28 herausgedreht und entnommen, worauf die gefrorenen Proben 26 in den Probenbehältern 27 in die Probenkammer 24 eingebracht werden. Dann wird alsbald der Transportbehälter 1 in umgekehrter Reihenfolge wieder verschlossen, nämlich durch Einschrauben des Stopfens 28, Aufsetzen des Deckelteils 45, Evakuieren des Deckelinnenraums 47 und Aufsetzen der Schutzkappe 50. Danach liegt der in Figur 1 dargestellte Zustand vor. Jetzt können die durch die vorbeschriebene Isolierwirkung des Transportbehälters 1 und insbesondere die Kältekapazität des vereisten Kältemittels im Kühlbehälter 16 vor Erwärmung geschützten Proben 26 an den Bestimmungsort versandt werden. Das ist ggf. auch ohne Verwendung der Umverpackung 58 gemäß Figuren 2 und 3 möglich. Die Umverpackung 59 kommt insbesondere bei längerer Lagerzeit und/oder Transportzeit sowie bei vergleichsweise hohen Umgebungstemperaturen zum Einsatz.
Am Bestimmungsort werden dann die Proben 26 dem Transportbehälter 1 entnommen, analysiert und ggf. auf Dauer in einem Tiefkühlraum gelagert. Anhand des Datenloggers 41 wird kontrolliert, dass die vorgesehene Lagertemperatur in der Probenkammer 24 eingehalten wurde und die Proben 26 dementsprechend keinen Schaden genommen haben.

Der Transportbehälter 1 ist für eine Wiederverwendung vorgesehen, wozu es lediglich einer erneuten Kältebeladung sowie des bereits beschriebenen Zusammenbaus und Versands an den Einsatzort bedarf. Außerdem empfiehlt es sich, nach erfahrungsgemäß festgelegten Zeitintervallen die Evakuierung des Isolierbehälters 2 zu überprüfen und zu erneuern.

Der erfindungsgemäße Tansportbehälter kann zusammenfassend wie folgt beschrieben werden: Der Transportbehälter 1 weist eine Superisolierung in Form eines evakuierten Isolierbehälter 2 mit einem Vakuumstützmaterial 55 auf. In ihn ist ein Kühlbehälter 16 integriert, der eine wärmeleitende Metallwollefüllung 57 enthält und mit einem organischen Kältemittel gefüllt ist, das eine Phasenumwandlung fest/flüssig im Temperaturbereich von -30° bis -85°C erfährt und eine Schmelzwärme von mindestens 50 J/ml aufweist. Es ist eine schlanke zylindrische Probenkammer 24 zur Aufnahme von tiefgefrorenen Gewebeproben 26 vorgesehen, die vom Kühlbehälter 16 umschlossen ist und einstückig in eine lange Halsöffnung 25 übergeht, die vom Isolierschaft 30 eines einschraubbaren Stopfens 28 weitgehend ausgefüllt und gegenüber der Probenkammer 24 abgedichtet werden kann. Der dann verbleibende Ringspalt 32 ist mittels einer Evakuiereinrichtung 48 evakuierbar. Der Stopfen 28 ist mit einem in die Probenkammer 24 ragenden Tampon 38 und einem Datenlogger 41 zur Aufzeichnung der Temperatur in der Probenkammer 24 versehen. Der Transportbehälter 1 ermöglicht nach der Vereisung des Kältemittels Versandzeiten und eine Zwischenlagerung von bis zu 14 Tagen ohne Gefährdung der aufgenommenen Gewebeproben 26.

## Patentansprüche

1. Transportbehälter zur Kühlhaltung von gefrorenem Gut (26), insbesondere von gefrorenen biologischen Gewebeproben oder Zellkulturen, mit
a) einem Isolierbehälter (2), der
b) durch ein isolierendes Deckelteil (45) zugänglich ist und
c) eine Superisolierung mit einer Wärmeleitzahl λ ≤ 0,002 W/m K aufweist,
d) einem im Isolierbehälter (2) angeordneten Kühlbehälter (16) mit einer Kältemittelkammer (21), die
e) eine Probenkammer (24) für das gefrorene Gut (26) unter Freilassung einer verschlußteilseitigen Zugangsöffnung (25) umschließt,
f) dauerhaft hermetisch verschlossen ist und
g) ein Kältemittel enthält, das
h) durch Phasenumwandlung fest/flüssig Kälte abgibt,
i) die Phasenumwandlung im Temperaturbereich von -15° bis -100° C erfährt und
j) eine Schmelzwärme von mindestens 50 J/ml aufweist, wobei
k) der Kühlbehälter (16) mit der Kältemittelkammer (21) fest in den Isolierbehälter (2) integriert ist,
l) der Isolierbehälter (2) unter Bildung einer halsförmigen Öffnung (25) von einer ihre Querabmessungen mindestens um das 3-fache übersteigenden Länge über die Probenkammer (24) hinausragt,
m) am äußeren Ende der Halsöffnung (25) ein Isolierring (15) vorgesehen ist, der
n) die Innenwand (3) und die Außenwand (4) des Isolierbehälters (2) voneinander isoliert und
o) die Innenwand (3) mit dem angeschlossenen Kühlbehälter (16) elastisch zur Außenwand (4) lagert,
p) dem Deckelteil (45) ein Stopfen (28) zugeordnet ist,
q) der mit einem Isolierschaft (30) in die Halsöffnung (25) ragt,
r) der die Halsöffnung (25) im wesentlichen über ihre ganze Länge ausfüllt und
s) am vorragenden Ende durch eine Halsdichtung (33) gegenüber der Innenwand (3) des Isolierbehälters (2) abgedichtet ist,
t) eine Behälterdichtung (9) zwischen dem Isolierbehälter (2) und dem Deckelteil (45) angeordnet ist, und **dadurch gekennzeichnet, dass**
u) eine Evakuiereinrichtung (48) zum Evakuieren des Deckelinnenraums (47) einschließlich des den Isolierschaft (30) umgebenden Ringspalts (32) vorgesehen ist.

2. Transportbehälter nach Anspruch 1, **dadurch gekennzeichnet, dass** das Kältemittel eine organische Reinsubstanz mit einer Phasenumwandlungstemperatur zwischen -30° und -85° C ist..

3. Transportbehälter nach Anspruch 1 oder 2, **dadurch gekennzeichnet, dass** der Isolierbehälter (2) hohlzylindrisch mit einem an seine Außenwand (4) anschließenden Außenboden (6) ausgebildet ist und seine Innenwand (3) zugleich die innere Umfangswand (20) des Kühlbehälters (16) bildet sowie die Probenkammer (24) umgrenzt und am inneren Ende in einen Kammerboden (11) übergeht, der im Spaltabstand zum den Kühlbehälterboden bildenden Innenboden (5) des Isolierbehälters (2) angeordnet ist.

4. Transportbehälter nach einem der Ansprüche 1 bis 3, **dadurch gekennzeichnet, dass** der Isolierbehälter (2) zur Vakuumisolierung mit einer Evakuiereinrichtung (51) versehen und mit einem Vakuumstützmaterial (55) gefüllt ist.

5. Transportbehälter nach Anspruch 4, **dadurch gekennzeichnet, dass** der Isolierbehälter (2) mit pulverförmiger, pyrogener Kieselsäure als Vakuumstützmaterial (55) gefüllt ist.

6. Transportbehälter nach Anspruch 4 oder 5, **dadurch gekennzeichnet, dass** in den Isolierbehälter (2) ein Getter (56) eingebaut ist.

7. Transportbehälter nach einem der Ansprüche 1 bis 6, **dadurch gekennzeichnet, dass** der Stopfen (28) mit dem Isolierschaft (30) ein separates Teil ist.

8. Transportbehälter nach einem der Ansprüche 1 bis 7, **dadurch gekennzeichnet, dass** der Stopfen (28) als Schraubstopfen ausgebildet ist, der mit einem Innengewinde (13) am äußeren Ende der Halsöffnung (25) zusammen wirkt.

9. Transportbehälter nach Anspruch 7 oder 8, **dadurch gekennzeichnet, dass** der Stopfen (28) einen gegenüber dem Isolierschaft (30) verbreiterten Kopf (29) umfaßt, der von einer Aussparung im Deckelteil (45) aufgenommen ist.

10. Transportbehälter nach Anspruch 9, **dadurch gekennzeichnet, dass** der Kopf (29) des Stopfens (28) einen Datenlogger (41) und eine diesem zugeordnete Batterie (42) aufnimmt, wobei der Datenlogger (41) über eine durch den Isolierschaft (30) geführte Signalleitung (43) mit einem Temperatursensor (44) im Bereich des freien Endes des Isolierschafts (30) verbunden ist.

11. Transportbehälter nach einem der Ansprüche 1 bis 10, **dadurch gekennzeichnet, dass** der Isolierschaft (30) wenigstens eine Ringnut (36) mit einem O-Ring (35) zur Abdichtung gegenüber der Innenwand (3) des Isolierbehälters (2) und zur Unterteilung des Ringspalts (32) zwischen der Innenwand (3) und dem Isolierschaft (30) aufweist.

12. Transportbehälter nach einem der Ansprüche 1 bis 11, **dadurch gekennzeichnet, dass** der Stopfen (28) an seinem die Probenkammer (24) begrenzenden vorragenden Ende einen auswechselbaren Tampon (38) zum Aufsaugen von Probenkammerflüssigkeit aufweist.

13. Transportbehälter nach einem der Ansprüche 1 bis 12, **dadurch gekennzeichnet, dass** die Kältemittelkammer (21) des Kühlbehälters (16) außer dem Kältemittel auch eine wärmeleitende Metallwollefüllung (57) zur besseren Kältebeladung vor der Aufnahme des gefrorenen Guts (26) aufweist.

14. Transportbehälter nach einem der Ansprüche 1 bis 13, **dadurch gekennzeichnet, dass** das Kältemittel eine organische Substanz ist.

15. Transportbehälter nach einem der Ansprüche 1 bis 14, **dadurch gekennzeichnet, dass** der Isolierbehälter (2) und der Kühlbehälter (16) aus Edelstahl gefertigt sind.

16. Transportbehälter nach einem der Ansprüche 1 bis 15, **dadurch gekennzeichnet, dass** ihm eine Umverpackung (58) aus einem isolierenden Außenbehälter (59) und einem isolierenden Außendeckel (60) zugeordnet ist, die eine den Abmessungen des Transportbehälters (1) entsprechende Aufnahmekammer (66) umschließen.

17. Transportbehälter nach Anspruch 16, **dadurch gekennzeichnet, dass** der Außenbehälter (59) ein Kältemittel (67) mit einer Phasenumwandlung fest/flüssig im Temperaturbereich von 0° bis -15° C enthält.

18. Transportbehälter nach einem der Ansprüche 1 bis 17, **dadurch gekennzeichnet, dass** ihm eine Kältebeladungseinrichtung zugeordnet ist, die einen hochwärmeleitenden massiven Kühlfinger (80, 88, 90), insbesondere aus Kupfer, umfaßt, der eine der addierten Länge von Probenkammer (24) und Halsöffnung (25) entsprechende Länge sowie eine der Probenkammer (24) und Halsöffnung (25) angepaßte Querabmessung aufweist, wobei der Kühlfinger (80, 88, 90) am einen Ende an eine Kälteübertragungsvorrichtung (78, 87, 89) angeschlossen ist.

19. Transportbehälter nach Anspruch 18, **dadurch gekennzeichnet, dass** die Kälteübertragungsvorrichtung (78) ein mit einer Außenisolierung (85) versehenes Gefäß (79, 81, 82) zur Aufnahme eines Tieftemperatur-Kältemittel (84) wie Flüssigstickstoff oder Trockeneis ist.

20. Transportbehälter nach Anspruch 19, **dadurch gekennzeichnet, dass** der Kühlfinger (80) zentral vom Boden (79) des Gefäßes (79, 81, 82) aufragt, das eine innere Kammer zur Aufnahme des mit abwärts weisender Halsöffnung (25) auf den Kühlfinger (80) aufgeschobenen Isolierbehälters (2) und eine äußere Ringkammer (83) für das Kältemittel (84) aufweist.

21. Transportbehälter nach Anspruch 18, **dadurch gekennzeichnet, dass** die Kälteübertragungsvorrichtung (89) mit Lamellen (91) zum erhöhten Wärmeübergang beim Kältebeladen in einem Tiefkühlschrank ausgebildet ist.

22. Transportbehälter nach einem der Ansprüche 18 bis 21, **dadurch gekennzeichnet, dass** der Kühlfinger in feste stirnseitige Anlage am Probenkammerboden (11) angedrückt und dynamisch nachgeführt ist, insbesondere durch Gewichtsbelastung.

23. Transportbehälter nach einem der Ansprüche 1 bis 17, **dadurch gekennzeichnet, dass** ihm ein Einfülltrichter (76) für eine direkte Kältebeladung mit einem Tieftemperatur-Kältemedium (75) wie Flüssigstickstoff zugeordnet ist, wobei der Einfülltrichter (76) in ein/das Innengewinde (13) am äußeren Ende der Halsöffnung (25) einschraubbar ist.

## Claims

1. A transport container for maintaining the temperature of frozen goods (26), in particular frozen biological tissue samples or cell cultures, comprising
a) an insulation container (2), which
b) is accessible via an insulating cover part (45) and
c) has superinsulation with a thermal conductivity λ ≤ 0.002 W/(mK);
d) a cooling container (16) comprising a coolant chamber (21) arranged in the insulation container (2), which coolant chamber
e) surrounds a sample chamber (24) for the frozen goods (26) except for an access opening (25) on the fastener side,
f) is permanently hermetically sealed and
g) comprises a coolant which
h) emits cold by solid/liquid phase transition,
i) undergoes phase transition in the temperature range between -15° and -100°C and
j) has a heat of fusion of at least 50 J/ml, wherein
k) the cooling container (16) comprising the coolant chamber (21) is fixedly integrated in the insulation container (2);
l) the insulation container (2) extends beyond the sample chamber (24) by a length which exceeds its transverse dimensions by at least a factor of three by forming a neck-shaped opening (25);
m) on the outer end of the neck opening (25), provision is made for an insulation ring (15) which
n) insulates the inner wall (3) and the outer wall (4) of the insulation container (2) from each other, and
o) elastically mounts the inner wall (3) with the connected cooling container (16) with respect to the outer wall (4),
p) a plug (28) being assigned to the cover part (45) and which
q) extends into the neck opening (25) with an insulation shaft (30),
r) fills the neck opening (25) substantially over its entire length, and
s) is sealed from the inner wall (3) of the insulation container (2) on the protruding end by means of a neck seal (33), and
t) a container seal (9) is arranged between the insulation container (2) and the cover part (45),
**characterized in that**
u) an evacuation apparatus (48) is provided for evacuating the cover interior (47), including the annular gap (32) surrounding the insulation shaft (30).

2. The transport container as claimed in claim 1, **characterized in that** the coolant is an organic pure substance with a phase transition temperature between -30° and -85°C.

3. The transport container as claimed in claim 1 or 2, **characterized in that** the insulation container (2) is designed in a hollow-cylindrical fashion with an outer base (6) adjoining the container's outer wall (4), and the container's inner wall (3), which simultaneously forms the inner peripheral wall (20) of the cooling container (16) and defines the sample chamber (24), merges at the inner end into a chamber base (11) which is arranged in the gap distance to the inner base (5) of the insulation container (2) which forms the cooling container base.

4. The transport container as claimed in one of claims 1 to 3, **characterized in that** the insulation container (2) is provided with an evacuation apparatus (51) for the purposes of vacuum insulation, and is filled with a vacuum-supporting material (55).

5. The transport container as claimed in claim 4, **characterized in that** the insulation container (2) is filled with powdered pyrogenic silicic acid as a vacuum-supporting material (55).

6. The transport container as claimed in claim 4 or 5, **characterized in that** a getter (56) is installed in the insulation container (2).

7. The transport container as claimed in one of claims 1 to 6, **characterized in that** the plug (28) comprising the insulation shaft (30) is a separate component.

8. The transport container as claimed in one of claims 1 to 7, **characterized in that** the plug (28) is designed as a screw plug which interacts with a female thread (13) at the outer end of the neck opening (25).

9. The transport container as claimed in claim 7 or 8, **characterized in that** the plug (28) comprises a head (29) which is widened compared to the insulation shaft (30) and which is held in a recess in the cover part (45).

10. The transport container as claimed in claim 9, **characterized in that** the head (29) of the plug (28) contains a data logger (41) and a battery (42) assigned to the latter, with the data logger (41) being connected to a temperature sensor (44) in the region of the free end of the insulation shaft (30) via a signal line (43) guided through the insulation shaft (30).

11. The transport container as claimed in one of claims 1 to 10, **characterized in that** the insulation shaft (30) comprises at least one annular groove (36) with an O-ring (35) for sealing it with respect to the inner wall (3) of the insulation container (2) and for subdividing the annular gap (32) between the inner wall (3) and the insulation shaft (30).

12. The transport container as claimed in one of claims 1 to 11, **characterized in that** on its protruding end which delimits the sample chamber (24), the plug (28) has a replaceable pad (38) for absorbing sample chamber liquids.

13. The transport container as claimed in one of claims 1 to 12, **characterized in that** in addition to the coolant, the coolant chamber (21) of the cooling container (16) also comprises a thermally conducting metal wool filling (57) for improved cold-loading prior to receiving the frozen goods (26).

14. The transport container as claimed in one of claims 1 to 13, **characterized in that** the coolant is an organic substance.

15. The transport container as claimed in one of claims 1 to 14, **characterized in that** the insulation container (2) and the cooling container (16) are made from stainless steel.

16. The transport container as claimed in one of claims 1 to 15, **characterized in that** it is assigned surrounding packaging (58), comprising an insulating outer container (59) and an insulating outer cover (60), which surrounds a reception chamber (66) whose dimensions correspond to those of the transport container (1).

17. The transport container as claimed in claim 16, **characterized in that** the outer container (59) comprises a coolant (67) with a liquid/solid phase transition in the temperature range between 0° and -15°C.

18. The transport container as claimed in one of claims 1 to 17, **characterized in that** it is assigned a cold-loading apparatus which comprises a thermally highly conducting solid cooling finger (80, 88, 90), comprising copper in particular, whose length corresponds to the sum of the lengths of the sample chamber (24) and neck opening (25), and whose transverse dimensions are matched to the sample chamber (24) and neck opening (25), with one end of the cooling finger (80, 88, 90) being connected to a cold transfer device (78, 87, 89).

19. The transport container as claimed in claim 18, **characterized in that** the cold transfer device (78) is a vessel (79, 81, 82) provided with outer insulation (85) for holding a low temperature coolant (84), such as liquid nitrogen or dry ice.

20. The transport container as claimed in claim 19, **characterized in that** the cooling finger (80) extends upwardly and centrally from the base (79) of the vessel (79, 81, 82) which has an outer annular chamber (83) for the coolant (84) and an inner chamber for holding the insulation container (2) which in turn is pushed onto the cooling finger (80) with a downward-pointing neck opening (25).

21. The transport container as claimed in claim 18, **characterized in that** the cold transfer device (89) is designed with lamellae (91) for increased heat transfer during cold-loading in a deep-freezer.

22. The transport container as claimed in one of claims 18 to 21, **characterized in that** the cooling finger is pressed against the sample chamber base (11) and dynamically tracked, so that the end side fixedly rests against the latter, in particular by weight-loading.

23. The transport container as claimed in one of claims 1 to 17, **characterized in that** it is assigned a filling-funnel (76) for direct cold-loading with a low temperature cooling medium (75), such as liquid nitrogen, with the filling-funnel (76) being able to be screwed into a/the female thread (13) at the outer end of the neck opening (25).

## Revendications

1. Récipient de transport permettant la conservation au froid de produits congelés (26), en particulier d'échantillons de tissus biologiques ou de cultures cellulaires congelés, comprenant :
a) un récipient isolant '(2),
b) qui est accessible par une partie de couvercle isolante (45) et
c) une superisolation avec une conductibilité thermique λ ≤ 0,002 W/m K,
d) un récipient de refroidissement (16) disposé dans le récipient isolant (2), avec une chambre de milieu frigorigène (21),
e) qui entoure une chambre d'échantillon (24) pour le produit congelé (26), en laissant libre une ouverture d'accès (25) du côté de la partie de fermeture,
f) qui est fermée hermétiquement de manière durable et
g) qui contient un milieu frigorigène,
h) qui diffuse du froid sous forme solide ou liquide par transition de phase,
i) qui subit la transition de phase dans une plage de températures de -15° à -100°C, et
j) qui présente une chaleur de fusion d'au moins 50 J/ml,
k) le récipient de refroidissement (16) étant intégré avec la chambre de milieu frigorigène (21) de manière fixe dans le récipient isolant (2),
l) le récipient isolant (2) dépassant au-delà de la chambre d'échantillon (24) en formant une ouverture (25) en forme de col ayant une longueur dépassant d'au moins 3 fois ses dimensions transversales,
m) à l'extrémité extérieure de l'ouverture en forme de col (25) est prévue une bague isolante (15)
n) qui isole l'une de l'autre la paroi interne (3) et la paroi externe (4) du récipient isolant (2) et
o) qui supporte la paroi interne (3) avec le récipient de refroidissement raccordé (16) de manière élastique par rapport à la paroi extérieure (4),
p) un bouchon (28) étant associé à la partie de couvercle (45),
q) pénétrant avec une tige isolante (30) dans l'ouverture en forme de col (25),
r) remplissant l'ouverture en forme de col (25) essentiellement sur toute sa longueur, et
s) étant rendu hermétique à son extrémité saillante par un joint d'étanchéité de col (33) vis-à-vis de la paroi interne (3) du récipient isolant (2), et
t) un joint d'étanchéité de récipient (9) étant disposé entre le récipient isolant (2) et la partie de couvercle (45),
**caractérisé en ce que**
u) un dispositif d'évacuation (48) pour évacuer l'espace interne du couvercle (47) y compris la fente annulaire (32) entourant la tige isolante (30) est prévu.

2. Récipient de transport selon la revendication 1, **caractérisé en ce que** le milieu frigorigène est une substance organique pure avec une température de transition de phase comprise entre -30° et -85°C.

3. Récipient de transport selon la revendication 1 ou 2, **caractérisé en ce que** le récipient isolant (2) est réalisé sous forme cylindrique creuse avec un fond extérieur (6) se raccordant à sa paroi extérieure (4), et sa paroi interne (3) forme en même temps la paroi périphérique interne (20) du récipient de refroidissement (16) et délimite la chambre d'échantillon (24) en se prolongeant à l'extrémité interne par un fond de chambre (11), qui est disposé dans l'intervalle de la fente au fond interne (5) du récipient isolant (2) formant le fond du récipient de refroidissement.

4. Récipient de transport selon l'une quelconque des revendications 1 à 3, **caractérisé en ce que** le récipient isolant (2) est pourvu, pour l'isolation sous vide, d'un dispositif d'évacuation (51) et est rempli d'un matériau favorisant le vide (55).

5. Récipient de transport selon la revendication 4, **caractérisé en ce que** le récipient isolant (2) est rempli d'acide silicique pyrogène pulvérulent en tant que matériau favorisant le vide (55).

6. Récipient de transport selon la revendication 4 ou 5, **caractérisé en ce qu'**un getter (56) est incorporé dans le récipient isolant (2).

7. Récipient de transport selon l'une quelconque des revendications 1 à 6, **caractérisé en ce que** le bouchon (28) avec la tige isolante (30) est une pièce séparée.

8. Récipient de transport selon l'une quelconque des revendications 1 à 7, **caractérisé en ce que** le bouchon (28) est réalisé sous forme de bouchon fileté, qui coopère avec un filetage interne (13) à l'extrémité extérieure de l'ouverture en forme de col (25).

9. Récipient de transport selon la revendication 7 ou 8, **caractérisé en ce que** le bouchon (28) comprend une tête (29) élargie par rapport à la tige isolante (30), qui est reçue par un évidement dans la partie de couvercle (45).

10. Récipient de transport selon la revendication 9, **caractérisé en ce que** la tête (29) du bouchon (28) reçoit un enregistreur de données (41) et une batterie (42) associée à celui-ci, l'enregistreur de données (41) étant connecté par le biais d'une conduite de signaux (43) guidée à travers la tige isolante (30) à un capteur de température (44) dans la région de l'extrémité libre de la tige isolante (30).

11. Récipient de transport selon l'une quelconque des revendications 1 à 10, **caractérisé en ce que** la tige isolante (30) présente au moins une rainure annulaire (36) avec un joint torique (35) pour l'étanchéité vis-à-vis de la paroi interne (3) du récipient isolant (2) et pour diviser la fente annulaire (32) entre la paroi interne (3) et la tige isolante (30).

12. Récipient de transport selon l'une quelconque des revendications 1 à 11, **caractérisé en ce que** le bouchon (28) présente, à son extrémité saillante limitant la chambre d'échantillon (24), un tampon remplaçable (38) pour l'aspiration de liquide de la chambre d'échantillon.

13. Récipient de transport selon l'une quelconque des revendications 1 à 12, **caractérisé en ce que** la chambre de milieu frigorigène (21) du récipient de refroidissement (16) présente, en plus du milieu frigorigène, également un remplissage de laine de métal (57) thermoconducteur, pour un meilleur stockage du froid avant de recevoir le produit congelé (26).

14. Récipient de transport selon l'une quelconque des revendications 1 à 13, **caractérisé en ce que** le milieu frigorigène est une substance organique.

15. Récipient de transport selon l'une quelconque des revendications 1 à 14, **caractérisé en ce que** le récipient isolant (2) et le récipient de refroidissement (16) sont fabriqués en acier noble.

16. Récipient de transport selon l'une quelconque des revendications 1 à 15, **caractérisé en ce qu'**il est affecté d'un emballage extérieur (58) constitué d'un récipient extérieur isolant (59) et d'un couvercle extérieur isolant (60), qui renferment une chambre de réception (66) qui correspond aux dimensions du récipient de transport (1).

17. Récipient de transport selon la revendication 16, **caractérisé en ce que** le récipient extérieur (59) contient un milieu frigorigène (67) avec une transition de phase solide/liquide dans la plage de température de 0° à -15°.

18. Récipient de transport selon l'une quelconque des revendications 1 à 17, **caractérisé en ce qu'**il est affecté d'un dispositif de stockage du froid, qui comprend un doigt de refroidissement massif (80, 88, 90) de grande conductibilité thermique, en particulier en cuivre, qui présente une longueur correspondant à la longueur ajoutée de la chambre d'échantillon (24) et de l'ouverture en forme de col (25), ainsi qu'une dimension transversale adaptée à la chambre d'échantillon (24) et à l'ouverture en forme de col (25), le doigt de refroidissement (80, 88, 90) étant raccordé à une extrémité à un dispositif de transfert de froid (78, 87, 89).

19. Récipient de transport selon la revendication 18, **caractérisé en ce que** le dispositif de transfert de froid (78) est un contenant (79, 81, 82) pourvu d'une isolation extérieure (85), pour recevoir un milieu frigorigène à basse température (84) tel que de l'azote liquide ou de la glace sèche.

20. Récipient de transport selon la revendication 19, **caractérisé en ce que** le doigt de refroidissement (80) fait saillie centralement depuis le fond (79) du contenant (79, 81, 82), qui présente une chambre interne pour recevoir le récipient isolant (2) poussé sur le doigt de refroidissement (80) avec l'ouverture en forme de col (25) tournée vers le bas, et une chambre annulaire extérieure (83) pour le milieu frigorigène (84).

21. Récipient de transport selon la revendication 18, **caractérisé en ce que** le dispositif de transfert de froid (89) est réalisé avec des lamelles (91) pour un transfert thermique accru lors du stockage de froid dans une armoire de congélation.

22. Récipient de transport selon l'une quelconque des revendications 18 à 21, **caractérisé en ce que** le doigt de refroidissement est pressé en appui fixe du côté frontal contre le fond (11) de la chambre d'échantillon et est adapté dynamiquement, en particulier par sollicitation pondérale.

23. Récipient de transport selon l'une quelconque des revendications 1 à 17, **caractérisé en ce qu'**il est affecté d'un entonnoir de remplissage (76) pour un stockage direct du froid avec un milieu frigorigène à basse température (75) tel que de l'azote liquide, l'entonnoir de remplissage (76) pouvant être vissé dans un ou dans le filetage interne (13) à l'extrémité extérieure de l'ouverture en forme de col (25).
